# EUROPÄISCHE PATENTANMELDUNG

(11) **EP 1 111 077 A1**
(43) Veröffentlichungstag der Anmeldung: **27.06.2001**
(21) Anmeldenummer: 99811210.6
(22) Anmeldetag: 24.12.1999
(51) Int. Cl.: C22B 21/00, C22C 21/08

(54) **Aluminiumbasislegierung aus Schrottmetall und daraus hergestellte Gusslegierung**

(71) Anmelder: ALUMINIUM RHEINFELDEN GmbH, 79618 Rheinfelden (DE)
(72) Erfinder: Koch, Hubert, 79618 Rheinfelden (DE); Krug, Peter, 79650 Schopfheim (DE); Schramm, Horst, 79540 Lörrach (DE); Ost, Gerhard, 79618 Rheinfelden (DE)
(74) Vertreter: Patentanwälte Breiter + Wiedmer AG

(57) **Zusammenfassung**

Eine Aluminiumbasislegierung zur Herstellung von Gusslegierungen mit Magnesium als wesentlichstem Legierungselement enthält mindestens 50% Schrottmetall auf Primäraluminiumbasis und als Rest Primäraluminium und/oder Schrottmetall auf Sekundäraluminiumbasis bekannter Zusammensetzung. Zur Herstellung der Aluminiumbasislegierung werden überwiegend Lebensmittel- und Tiernahrungsverpackungen mit einem Pyrolyseverfahren aufgetrennt und nachfolgend das in den Verpackungen enthaltene Aluminium durch Einschmelzen zurückgewonnen. Die aus der Aluminiumbasislegierung hergestellten Gusslegierungen eignen sich vor allem zur Herstellung von warmfesten und/oder korrosionsbeständigen Teilen im Motorenbereich, insbesondere zur Herstellung von Motorblöcken, Zylinderköpfen und Ölwannen, mittels Sand-, Kokillen-, Druckguss, Thixocasting oder Thixoschmieden.

## Beschreibung

Die Erfindung betrifft eine Aluminiumbasislegierung zur Herstellung von Gusslegierungen mit Magnesium als wesentlichstem Legierungselement. Im Rahmen der Erfindung liegen auch ein Verfahren zur Herstellung der Aluminiumbasislegierung, aus der Aluminiumbasislegierung hergestellte Gusslegierungen sowie ein Verfahren zu deren Herstellung.

Zur Herstellung von warmfesten und/oder korrosionsbeständigen Teilen im Motorenbereich von Fahrzeugen werden heute überwiegend Umschmelzlegierungen, auch Sekundäraluminiumlegierungen bzw. Schrottmetall auf Sekundäraluminiumbasis genannt, eingesetzt. Aufgrund der Zusammensetzung der genormten Sekundäraluminiumlegierungen weisen daraus hergestellte Gussprodukte üblicherweise eine nur geringe Dehnung von weniger als 1% auf. Für gewisse Anwendungen wären höhere Dehnungswerte wünschenswert, ohne dass die Legierungen aus verhältnismässig teurem Primär- bzw. Hüttenmetall hergestellt werden müssen.

Aus der DE-C-1483229 sind aus Sekundäraluminiumlegierungen bzw. aus Umschmelzmetall hergestellte AlMgSi-Legierungen zur Herstellung von Zylinderköpfen bekannt.

In der EP-A-0779371 bzw. der EP-A-0780481 ist ein Verfahren zur Aufbereitung von aluminiumhaltigen Abfällen zur Rückgewinnung von Aluminium aus diesen Abfällen offenbart. Der wesentliche Kern dieses vorbekannten Verfahrens ist die Rückgewinnung von Aluminium aus mit organischen Verbindungen behafteten Materialien, insbesondere aus Lebensmittel- und Tiemahrungsverpackungen, in der Form von bedruckten und/oder lackierten Aluminiumabfällen oder Aluminium/Kunststoff-Verbundstoffabfällen.

Der Erfindung liegt die Aufgabe zugrunde, eine kostengünstige Aluminiumbasislegierung zur Herstellung von Gusslegierungen bereitzustellen. Aus der Aluminiumbasislegierung hergestellte Gusslegierungen sollen u.a. zur Herstellung von warmfesten und/oder korrosionsbeständigen Teilen im Motorenbereich geeignet sein.

Zur erfindungsgemässen Lösung der Aufgabe führt eine Aluminiumbasislegierung, die mindestens 50% Schrottmetall auf Primäraluminiumbasis und als Rest Primäraluminium und/oder Schrottmetall auf Sekundäraluminiumbasis bekannter Zusammensetzung enthält.

Der Einsatz von Schrottmetall auf Primäraluminiumbasis, d.h. sogenannte Primärlegierungen, führt zu einem verhältnismässig "sauberen" Basiswerkstoff ohne hohe Gehalte an im allgemeinen unerwünschten Begleitelementen.

Falls der Gehalt an unerwünschten Begleitelementen für eine bestimmte Anwendung zu hoch sein sollte, kann in diesem Fall die Aluminiumbasislegierung mit Primäraluminium "verdünnt" werden. Im allgemeinen sollte jedoch darauf geachtet werden, dass die Schrottzusammensetzung zur Herstellung einer Aluminiumbasislegierung mit einem geringen Gehalt an unerwünschten Begleitelementen vor der Herstellung des Schrottmetalls entsprechend vorselektioniert wird. Andererseits kann die Aluminiumbasislegierung neben dem Schrottmetall auf Primäraluminiumbasis grundsätzlich auch einen gewissen Teil Schrottmetall auf Sekundäraluminiumbasis enthalten, jedoch sollte in diesem Fall die Zusammensetzung des Schrottmetalls bekannt sein, so dass nicht zu grosse Mengen an unerwünschten Begleitelementen in die Aluminiumbasislegierung eingebracht werden.

Bevorzugt liegt der Anteil Primärlegierungen bei mindestens 80% und stellt im Idealfall 100% des eingesetzten Schrottmetalls dar.

Zweckmässigerweise wird als Schrottmetall auf Primäraluminiumbasis überwiegend aus Lebensmittel- und Tiernahrungsverpackungen gewonnenes Recyclingmetall eingesetzt.

Bei der Herstellung einer Gusslegierung aus der erfindungsgemässen Aluminiumbasislegierung kann zusätzlich Magnesium bis zu einem Gesamtgehalt von 3.0 bis 5.0 Gew.-% und Silizium bis zu einem Gesamtgehalt von 1.5 bis 3.0 Gew.-% zugesetzt werden. Weitere zusätzliche Legierungselemente sind 0.5 bis 1.2 Gew.-% Mangan und/oder 0.5 bis 1.2 Gew.-% Kupfer sowie max. 0.2 Gew.-% Titan, max. 0.4 Gew.-% Kobalt, max. 0.4 Gew.-% Cer und max. 1.2 Gew.-% Zirkonium.

Die erfindungsgemäss aus Primäraluminiumlegierungen hergestellten Gusslegierungen erreichen gegenüber den nach dem Stand der Technik aus Sekundäraluminiumlegierungen hergestellten Gusslegierungen eine höhere Dehnung, die bis zu 6% betragen kann.

Ein zur Herstellung der erfindungsgemässen Aluminiumbasislegierung besonders geeignetes Verfahren zeichnet sich dadurch aus, dass mit organischen Verbindungen behaftete Materialien auf Primäraluminiumbasis nach ihrem Heizwert und ihrem Aluminiumgehalt getrennt aufbereitet, zur Einstellung eines Sollwertes dosiert zusammengeführt, die organischen Verbindungen durch Pyrolyse unter Bildung von Pyrolysegas und Pyrolysekoks verschwelt, der Pyrolysekoks abgetrennt, die derart vorbehandelten Materialien ggf. blankgeglüht, ggf. zur Abtrennung von Folienbestandteilen gesichtet und nachfolgend eingeschmolzen werden.

Hierbei werden Aluminium-Verbundstoffe zweckmässigerweise auf eine stückige Grösse zerkleinert und nach der Pyrolyse zumindest die Eisenteile abgetrennt.

Bei einer zweckmässigen Ausgestaltung des erfindungsgemässen Verfahrens erfolgt die Zusammenführung der getrennt aufbereiteten Materialien zur Einstellung des Sollwertes über eine computergesteuerte Dosieranlage, wobei ggf. neben dem Heizwert und dem Aluminiumgehalt der Materialien weitere Parameter der aufbereiteten Materialien, insbesondere deren Feuchte, Schüttgewicht und Korngrösse, berücksichtigt werden.

Je nach Anwendungsbereich der aus der Aluminiumbasislegierung hergestellten Gusslegierung kann mit dem genannten Verfahren durch Zusammenmischen von Schrotten bzw. Abfällen unterschiedlicher Art die Zusammensetzung der Aluminiumbasislegierung innerhalb gewisser Grenzen eingestellt werden, d.h. das Verfahren ermöglicht auf einfache Weise die Herstellung unterschiedlicher Aluminiumbasislegierungen für unterschiedliche Anwendungen. In den Tabellen 1 bis 3 sind beispielhaft drei Mischungen unterschiedlicher Schrotte angegeben. Die typischen Zusammensetzungen der einzelnen Schrotte beziehen sich auf 100% Aluminiumlegierung. Die Tabellen enthalten weiter typische Zusammensetzungen der aus den drei Schrottmischungen hergestellten Aluminiumbasislegierungen. Hierbei bedeutet
- DSD-Material: Verpackungssammelgut, bereitgestellt von der Organisation Duales System Deutschland
- IGORA-Material: Verpackungssammelgut, bereitgestellt von der Schweizerischen Sammelstelle IGORA
- Aluminiummischabfälle: Vorsortierte Verpackungs- und andere Aluminiumabfälle unterschiedlicher Herkunft.

**Tabelle 1**

| | Zusammensetzung in Gew.% | | | | | | | |
|---|---|---|---|---|---|---|---|---|
| **Mischung I** 50% DSD-Material 50% Flaschenkapseln | Si | Fe | Cu | Mn | Mg | Cr | Ni | Zn |
| DSD Material | 0.20 | 0.60 | 0.10 | 0.40 | 0.30 | 0.01 | 0.01 | 0.05 |
| Fremdstoffe im DSD-Material | 0.10 | 2.00 | 1.00 | - | - | 0.11 | 0.05 | 1.70 |
| **DSD-Material gesamt** | **0.30** | **2.60** | **1.10** | **0.40** | **0.30** | **0.12** | **0.06** | **1.75** |
| **Flaschenkapseln** | **0.20** | **0.50** | **0.16** | **0.52** | **0.20** | **0.02** | **0.01** | **0.03** |
| **Aluminiumlegierung I** | **0.24** | **1.20** | **0.50** | **0.48** | **0.25** | **0.06** | **0.05** | **0.30** |

**Tabelle 2**

| | Zusammensetzung in Gew.% | | | | | | | |
|---|---|---|---|---|---|---|---|---|
| **Mischung II** 40% IGORA-Material 35% DSD-Material 25% Al-Mischabfälle | Si | Fe | Cu | Mn | Mg | Cr | Ni | Zn |
| **IGORA-Material** | **0.28** | **1.00** | **0.14** | **0.35** | **0.18** | **0.012** | **0.01** | **0.05** |
| **DSD-Material gesamt** | **0.30** | **2.60** | **1.10** | **0.40** | **0.30** | **0.12** | **0.06** | **1.75** |
| **Al-Mischabfälle** | **0.50** | **0.43** | **2.90** | **0.40** | **0.28** | **0.03** | **0.03** | **2.85** |
| **Aluminiumlegierung II** | **0.37** | **1.13** | **1.10** | **0.40** | **0.30** | **0.03** | **0.03** | **0.60** |

**Tabelle 3**

| | Zusammensetzung in Gew.% | | | | | | | |
|---|---|---|---|---|---|---|---|---|
| **Mischung III** 50% DSD-Material 25% Flaschenkapseln 25% Dosen | Si | Fe | Cu | Mn | Mg | Cr | Ni | Zn |
| **DSD-Material gesamt** | **0.30** | **0.54** | **0.77** | **0.43** | **0.07** | **0.016** | **0.10** | **1.80** |
| **Flaschenkapseln** | **0.20** | **0.50** | **0.16** | **0.52** | **0.20** | **0.02** | **0.01** | **0.03** |
| **Dosen** | **0.20** | **0.40** | **0.16** | **0.77** | **0.83** | **0.01** | **0.01** | **0.02** |
| **Aluminiumlegierung III** | **0.20** | **0.49** | **0.50** | **0.55** | **0.32** | **0.02** | **0.05** | **0.45** |

Zu den in den Tabellen angegebenen Zusammensetzungen der Schrottmaterialien sei hier noch folgendes angemerkt:
- Der verhältnismässig hohe Anteil an Zink im DSD-Material einschliesslich der Fremdstoffe wird zu einem grossen Teil während der Pyrolyse im Koks zurückbehalten, so dass die Aluminiumbasislegierungen einen verhältnismässig geringen Zn-Gehalt aufweisen.
- Die Zusammensetzung der Aluminiumbasislegierung kann nicht rechnerisch aus den Zusammensetzungen der einzelnen Schrotte einer Mischung errechnet werden, da insbesondere Verpackungsabfälle viel Kunststoff und anhaftende Fremdstoffe wie Nahrungsmittelreste enthalten und daher der Aluminiumanteil in diesen Schrotten wesentlich kleiner ist als bei praktisch reinen Metallschrotten wie beispielsweise Dosen oder Flaschenkapseln.

Bei einem besonders bevorzugten Verfahren zur Herstellung einer Gusslegierung ausgehend von einer Aluminiumbasislegierung wird zu einer Schmelze aus der Aluminiumbasislegierung, einschliesslich ggf. zugegebener weiterer Legierungselemente, 0.02 bis 0.15 Gew.-% Vanadium, vorzugsweise 0.02 bis 0.08 Gew.-% Vanadium, insbesondere 0.02 bis 0.05 Gew.-% Vanadium, und weniger als 60 ppm Beryllium zugegeben.

Die Zugabe von Vanadium führt zu einem höheren Verkrätzungswiderstand der Gusslegierung als dies mit einem Berylliumzusatz nach dem Stand der Technik möglich ist. Es wurde nämlich beobachtet, dass der Berylliumgehalt in einer Aluminium-Magnesium-Legierung in der Schmelze mit der Zeit abnimmt. Beim Unterschreiten einer kritischen Berylliumkonzentration setzt offenbar eine rasche Krätzebildung auf der Schmelze ein. Eine erhöhte Berylliumzugabe zur Metallschmelze ist wegen der karzinogenen Eigenschaft von Beryllium unerwünscht und sollte deshalb möglichst vermieden werden.

Durch das Zulegierungen von Vanadium kann die krätzevermindernde Zugabe von Beryllium in erheblich kleinerer Menge erfolgen als ohne Vanadiumzugabe. Bei einem Gehalt von mehr als 3.5 Gew.-% Magnesium genügt eine Zugabe von 10 bis 50 ppm Beryllium, vorzugsweise 10 bis 35 ppm Beryllium. Liegt der Gehalt von Magnesium in der Schmelze tiefer als 3.5 Gew.-%, so sind weniger als 25 ppm Beryllium erforderlich, um einen hohen Verkrätzungswiderstand zu erzielen. Bei geringeren Anforderungen an die Verkrätzungsneigung kann sogar auf eine Berylliumzugabe verzichtet werden.

Der bevorzugte Anwendungsbereich von aus der erfindungsgemässen Aluminiumbasislegierung hergestellten Gusslegierungen liegt in der Herstellung von warmfesten und/oder korrosionsbeständigen Teilen im Motorenbereich, insbesondere von Motorblöcken, Zylinderköpfen und Ölwannen, mittels Sand-, Kokillen-, Druckguss, Thixocasting oder Thixoschmieden.

Weitere Vorteile, Merkmale und Einzelheiten der Erfindung ergeben sich aus der nachfolgenden Beschreibung einer beispielhaften Schrottaufbereitung sowie anhand der Zeichnung; diese zeigt schematisch in
- - Fig. 1: ein Schema des prinzipiellen Aufbaus einer Recycling-Anlage;
- - Fig. 2: ein Grundfliessbild der Anlage von Fig. 1;
- - Fig. 3: ein Blockschaltbild der Anlage von Fig. 1;
- - Fig. 4: ein Verfahrensfliessbild der Anlage von Fig. 1;
- - Fig. 5-7: vergrösserte Ausschnitte aus Fig. 3.

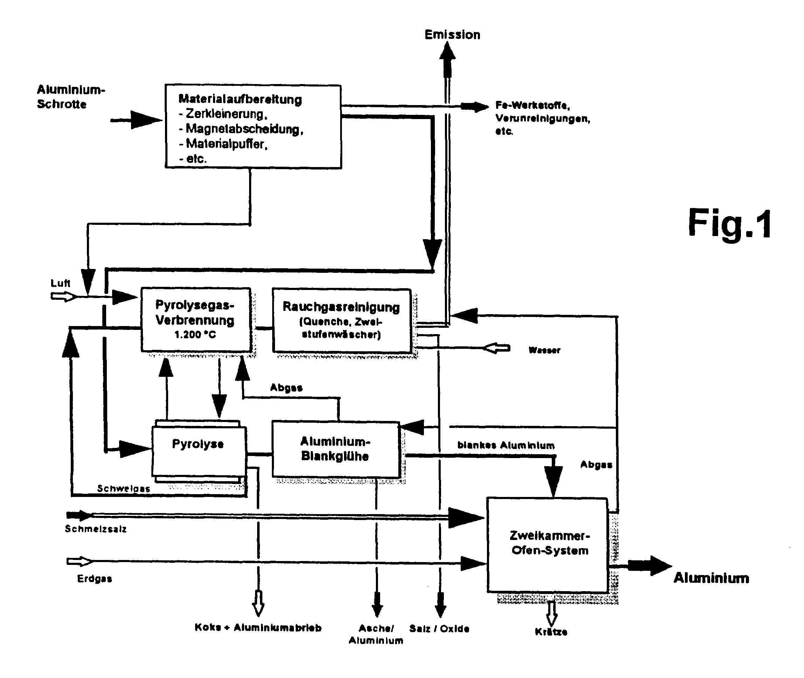

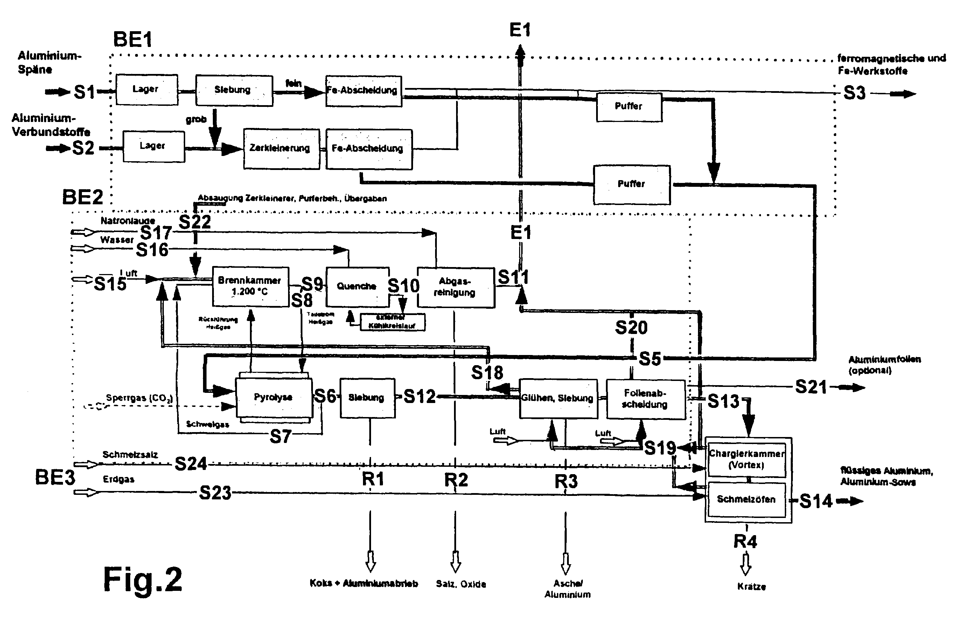

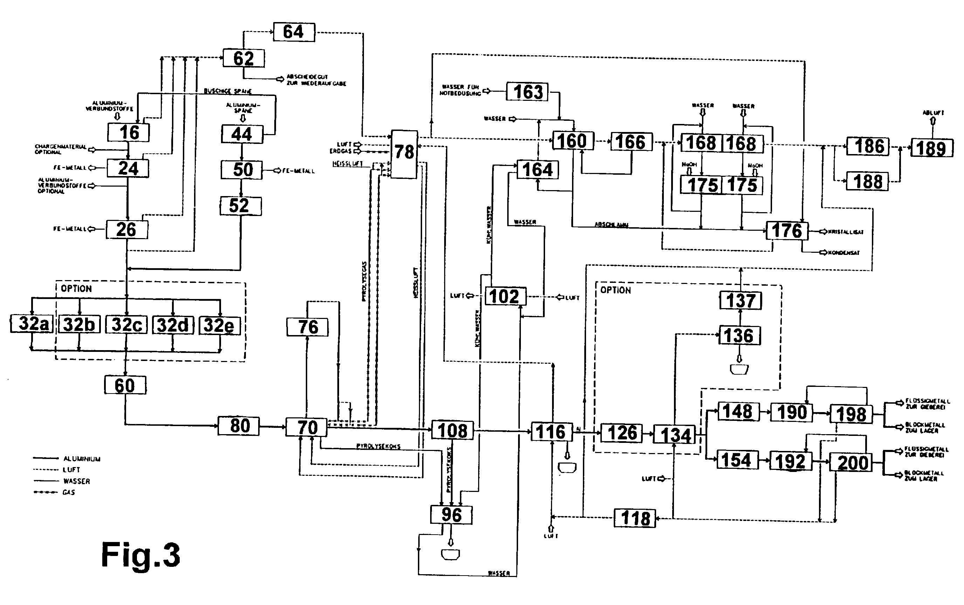

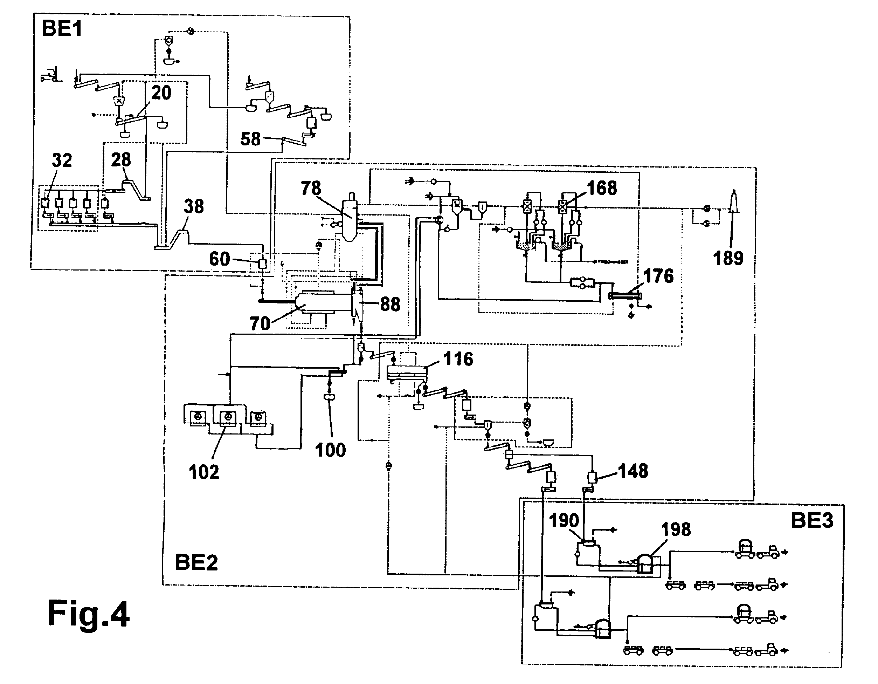

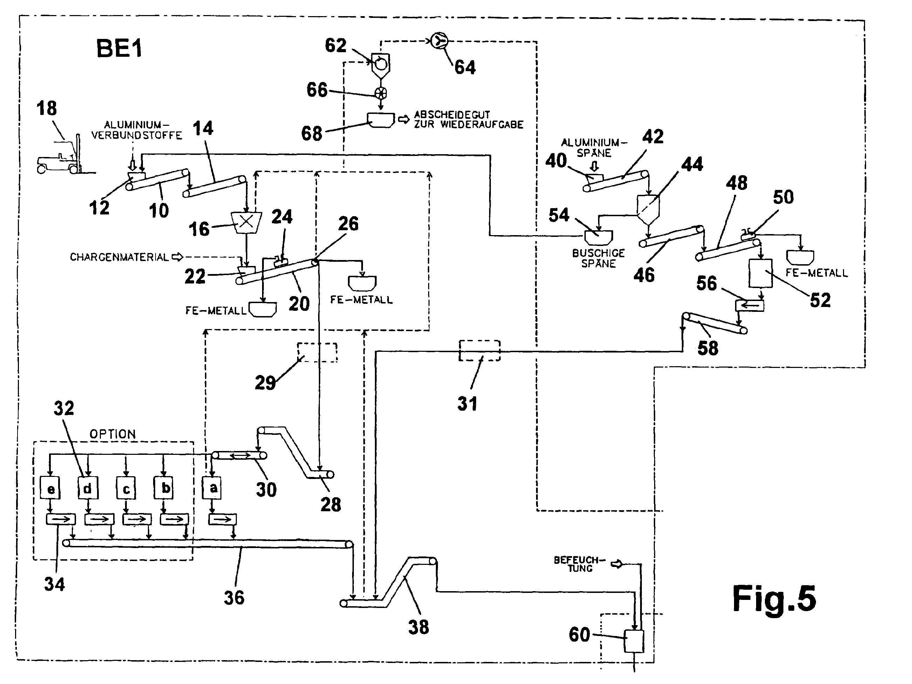

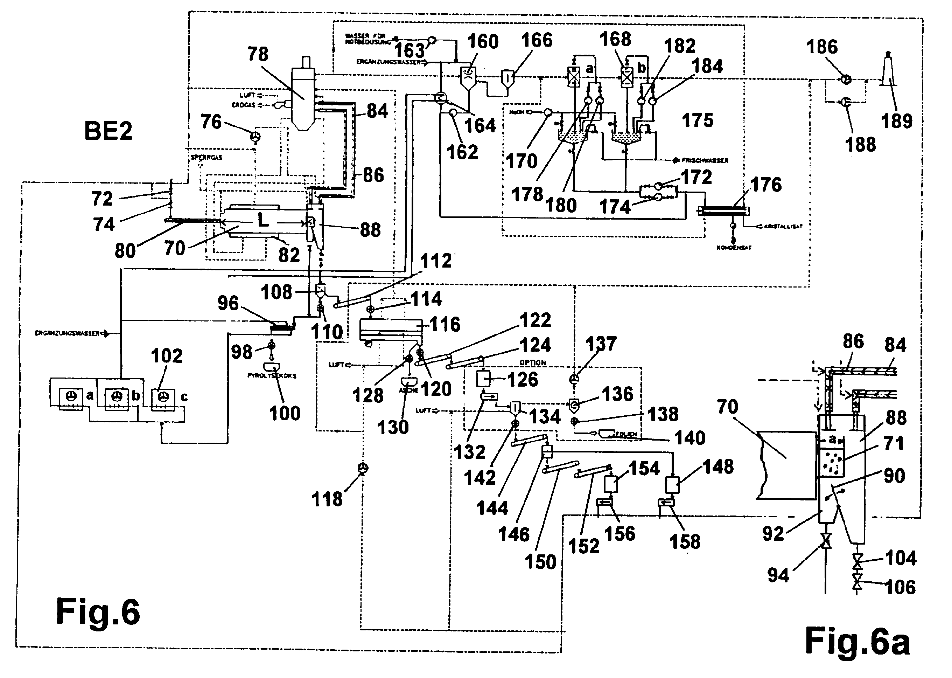

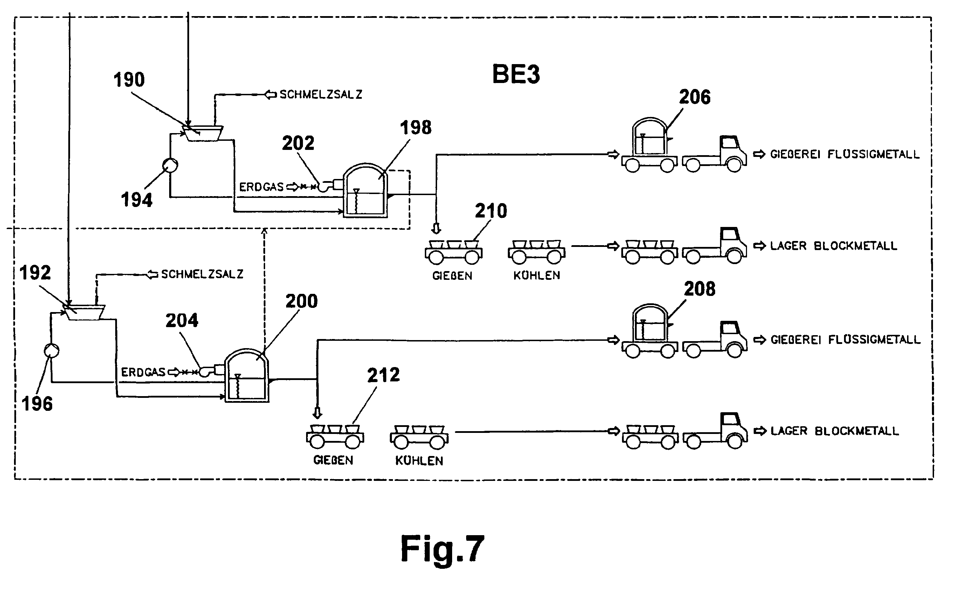

Eine Anlage zur Rückgewinnung von Aluminium aus mit organischen Verbindungen behafteten Aluminium-Schrotten weist gemäss Fig. 1 bis 7 die drei Betriebseinheiten
BE1 Materialaufbereitung
BE2 Decoatinganlage
BE3 Schmelzanlage
auf.

Der Materialaufbereitung BE1 sind die Materialanlieferung, Lagerung bis zur Chargierung sowie die mechanische Aufbereitung und Vorhaltung (Pufferung) des aufbereiteten Materials für die Decoatinganlage BE2 zugeordnet.

Die Anlieferung der in der Anlage zu verarbeitenden Materialien geschieht in der Regel per LKW oder Bahnwaggon. Die eingehenden Materialien werden verwogen. Art, Herkunft und Mengen des angelieferten Materials werden erfasst und dokumentiert. Je nach Materialart erfolgt eine Eingangsprüfung.

Die Materialaufbereitung BE1 dient der Aufbereitung zweier grundsätzlich verschiedener Materialarten:
- Späne S1 aus der Metallbearbeitung. Diese werden gesiebt, die Grobfraktion wird zerkleinert und Eisenmetalle werden abgetrennt.
- Aluminium-Verbundstoffe S2. Diese werden auf eine stückige Grösse von beispielsweise 30 x 40 mm zerkleinert und Eisenmetalle werden aussortiert. Eingesetzte Stoffe sind hier also z.B. DSD-(Duales System Deutschland) Material, lackierte Bleche und Metallwaren, lackierte Strangpressprofile, lackierte Tuben und Aerosoldosen, flexible Verpackungen aus Aluminium im Verbund mit Kunststoffen oder Papier, gebrauchte Aluminiumdosen, Kühlerschrotte, Röhrchen, Lamellen, Durchstiche, Offset-Bleche, Kabel, geschält, mit Fett, Flaschenkapseln, Nummernschilder, Fahrbahnmarkierungen und Fensterprofile.

Aluminium-Verbundstoffe S2 werden im Falle einer sofortigen Verarbeitung in einem Bereitstellungsraum vor der Grobzerkleinerung zwischengelagert. Die Zuführung der Aluminium-Verbundstoffe S2 zur Grobzerkleinerung erfolgt über einen Aufgabeförderer 10 und einen nachgeschalteten weiteren Aufgabeförderer 14 in ein langsam laufendes Schneidwerk 16. Die Beschickung des ersten Aufgabeförderers 10 erfolgt hierbei über einen Aufgabeschacht 12 mittels eines Staplers 18. Es ist auch möglich, das Schneidwerk 16 direkt mit dem Stapler 18 zu beschicken.

Durch den Einsatz des langsam laufenden Schneidwerks 16 wird bei der Zerkleinerung ein spezifisch geringer Feinkornanteil erzeugt. Aluminium-Späne werden später in den Prozess eingeschleust.

Das grob zerkleinerte Material fällt aus der Rotorschere 16 heraus auf einen Gurtförderer 20; dieser hat zusätzlich einen Aufgabeschacht 22 zur optimalen Aufgabe von Chargenmaterial. Über dem Gurtförderer 20 ist ein Überbandmagnetabscheider 24 mit Auflockerungshilfe angeordnet. An dieser Stelle werden grobe Eisenbestandteile S3 aus dem Materialfluss entnommen.

Der Gurtförderer 20 ist mit einer integrierten Starkfeldmagnetrolle oder Magnettrommel 26 ausgerüstet. Hier werden weitere Eisenbestandteile S3 einschliesslich Edelstahl abgetrennt.

Alternativ können Eisenbestandteile 53 auch erst nach der Pyrolyse abgetrennt werden.

Die aufbereiteten Aluminium-Verbundstoffe S2 werden mittels Steilförderer 28 und Zuteilungsförderer 30 in einen von insgesamt beispielsweise fünf Pufferbehältern 32 a-e mit einem Fassungsvermögen von beispielsweise je 40 m³ eingetragen.

Die Pufferbehälter 32 sind geschlossen ausgeführt, d.h. mit gekapselten Ein- und Austrägen sowie Entlüftung zu einer Absauganlage. Das gespeicherte Material wird bedarfsabhängig über Dosierförderer 34 a-e auf einen Gurtförderer 36 ausgetragen; dieser übergibt an den Zuteilungsförderer 38 zur Decoatinganlage BE2.

Alternativ zur Aufgabe der nach Abtrennung der Eisenbestandteile S3 aufbereiteten Aluminium-Verbundstoffe S2 auf den Steilförderer 28 können diese beispielsweise in einem Querstromsichter 29 nach dem Aluminiumgehalt bzw. dem Heizwert Hᵤ weiter aufgeteilt werden. Die Trennung in aluminiumreiche Bestandteile mit niedrigem Heizwert Hᵤ, z.B. Profilabschnitte, und in aluminiumarme Bestandteile mit hohem Heizwert Hᵤ, z.B. beschichtete Folien, erfolgt im Querstromsichter 29 aufgrund des unterschiedlichen Gewichtes und des spezifischen Anströmquerschnittes. Die verschiedenen Fraktionen mit unterschiedlichem Aluminiumgehalt bzw. unterschiedlichem Heizwert Hᵤ werden sodann in den Pufferbehältern 32 getrennt zwischengelagert.

Aluminiumspäne S1 werden im Bereitstellungsraum aus Späneboxen mittels Radlader entnommen und über einen Aufgabeschacht 40 in einem Aufgabeförderer 42 zu einem Sieb 44 aufgegeben. Das Sieb 44 trennt Grob- und Feinspäne.

Die Feinspäne gelangen über einen Gurtförderer 46 und einen nachgeschalteten weiteren Gurtförderer 48 mit Überband-Magnetscheider 50 zur Abtrennung der Eisenbestandteile S3 in einen Pufferbehälter 52 mit beispielsweise 20 m³ Fassungsvermögen.

Anfallendes Grobgut wie z.B. buschige Späne werden in einem Sammelbehälter 54 aufgefangen und mittels des Staplers 18 der Zerkleinerungslinie für die Aluminium-Verbundstoffe aufgegeben.

Vor der Aufgabe der Feinspäne auf den Zuteilungsförderer 38 kann der Materialstrom zur Erkennung und nachfolgenden Abtrennung unerwünschter NE-Metalle einen Metalldetektor 31 durchlaufen.

Zusätzlich kann nach Abtrennung der Eisenbestandteile auch für eine stückige Teilfraktion des Querstromsichters 29 der Materialstrom zur Erkennung und nachfolgenden Abtrennung unerwünschter NE-Metalle den Metalldetektor 31 durchlaufen.

Die Feinspäne werden aus dem Pufferbehälter 52 mittels eines Dosierförderers 56 auf einen Gurtförderer 58 gegeben und gelangen so zur Aufbereitungslinie der Aluminium-Verbundstoffe auf den Zuteilungsförderer 38 zur Decoatinganlage BE2.

Das Material aus der Verbund- und Spänelinie gelangt zunächst in einen Pufferbehälter bzw. eine Materialvorlage 60, in der das Material ggf. befeuchtet wird. Von hier aus wird das Eintragssystem einer Pyrolysetrommel 70 beaufschlagt. An Stelle der Befeuchtung im Pufferbehälter 60 kann am Pyrolyseeintragskopf Wasser, Wasserdampf und/oder ein Trägergas, z.B. CO₂, eingedüst werden.

An der Aufbereitungsanlage wird an verschiedenen Stellen wie Zerkleinerer, Übergabestellen und Materialpuffer Abluft erfasst, um einer diffusen Freisetzung von Emissionen luftfremder Stoffe wie Staub zu begegnen. Die einzelnen Abluftströme werden zusammengeführt und über einen Zyklonabscheider 62 und einen nachgeschalteten Ventilator 64 einer Brennkammer 78 zur Nachverbrennung zugeführt. Im Zyklonabscheider 64 abgeschiedene Feststoffe werden über eine Zellenradschleuse 66 in einen Container 68 ausgetragen und beispielsweise in den Aufgabeschacht 22 chargiert.

Der Decoatinganlage BE2 sind die Pyrolysetrommel, ein Blankglüh-Aggregat, ein Folienabscheider, eine Pyrolysegas-Verbrennung sowie eine Rauchgasreinigung mit Quenche, Wärmetauscher, Zweistufenwäscher, etc. zugeordnet.

Das Material wird der Pyrolysetrommel 70, die eine Länge L von beispielsweise 25 m aufweist, aus der Materialvorbereitung BE1 über die Materaialvorlage 60 und ein Schleusensystem bestehend aus zwei Dichtschiebern 72, 74 zugeführt.

Zur Vermeidung von Pyrolysegasaustritten aus dem Aufgabebereich und Minimierung von Falschlufteinbrüchen in die Pyrolysetrommel 70 wird an das Schleusensystem ein Unterdruck angelegt. Hierzu wird in diesen Raum Inertgas, z.B. CO₂, gespült und das zwischen den beiden Schiebern 72, 74 befindliche Gas gleichzeitig mittels eines Ventilators 76 abgesaugt und mit dem Heizmantel-Abgas S8 der Brennkammer 78 zugeführt.

Die Dichtschieber 72, 74 sind jeweils dichtschliessend ausgeführt. Die Materialzugabe in die Pyrolysetrommel 70 erfolgt getaktet über diese Schiebersysteme. Zur Vermeidung von Falschlufteinbruch in die Trommel kann jeweils nur einer der beiden Schieber geöffnet sein, was mittels einer Endlagenüberwachung gewährleistet ist. Eine weitere Abdichtung erfolgt über die Materialvorlagen über dem ersten Doppelschieber 72, zwischen beiden Dichtschiebern 72, 74 sowie in einer Eintragsschnecke 80, die flüssigkeitsgekühlt sein kann.

Der Pyrolysevorgang geschieht bei ca. 550°C. Aufgrund der Temperatur- und Verweilzeitverhältnisse ist gewährleistet, dass das Material bei Erreichen des Pyrolyseaustragskopfes nach ca. 50 min vollständig pyrolysiert ist. In der Pyrolysetrommel 70 findet eine umfassende Entgasung der Materialien statt.

Die für den Pyrolysevorgang erforderliche Energie wird über einen die Pyrolysetrommel 70 umgebenden Heizmantel 82 zugeführt. Der Heizmantel 82 ist feuerfest ausgekleidet und selbst ohne Brenner ausgeführt; das erforderliche Heissgas S8 wird von aussen von der Brennkammer 78 an den Heizmantel 82 herangeführt und dort gleichmässig an die Pyrolysetrommelwand geleitet. Nach Durchströmen des Heizmantels 82 wird das auf ca. 580°C abgekühlte Heissgas S8 mittels des Ventilators in Heizmäntel 84 von Pyrolysegasleitungen 86 geleitet und anschliessend wieder in die Brennkammer 78 eingespeist. Die Rückführung in die Brennkammer 78 erfolgt im Hinblick auf eine geschlossene Kreislaufführung und konsequente Emissionsminimierung.

Der Heizmantel 82 besteht aus einer Kesselblechkonstruktion mit Feuerfest-Ausmauerung. Zur Vermeidung eines Heizgasaustritts zwischen Heizmantel 82 und Drehdurchführung der Pyrolysetrommel 70 sind Seilzugabdichtungen installiert. Die Dichtung erfolgt durch sich gegenseitig überlappende Gusssegmente, die mittels umschlingendem Drahtseil über arretierende Spannstifte gegen die rotierende Drehofendichtfläche gepresst werden. Aufgrund der Druckverhältnisse im Heizmantel 82, d.h. geringer Unterdruck durch die saugseitige Gebläseanordnung wird ein Heizgasaustritt an die Umgebung ebenfalls bereits konstruktiv verhindert.

Zum Anfahren der Pyrolysetrommel 70 wird, solange noch keine ausreichende Pyrolysegasproduktion stattfindet, Erdgas als Energieträger verwendet. Die Beheizung erfolgt dabei in gleicher Weise, d.h. durch Bereitstellung der Heizenergie aus der Brennkammer 78.

Die Pyrolysetrommel 70 wird an der Austragsseite über einen Zahnkranz mittels Hydraulikantrieb angetrieben, zusätzlich verfügt die Trommel noch über einen Hilfsantrieb. Die Trommeldrehzahl beträgt z.B. 5 Umdrehungen pro Minute und kann variiert werden.

Die Pyrolysetrommel 70 ist an Ein- wie Austragsseite mittels Gleitringdichtung und CO₂-Sperrgasführung abgedichtet.

Die Abtrennung des Pyrolysegases und der Feststoffe erfolgt am Pyrolyseaustragskopf. Das Pyrolysegas wird druckgeregelt abgezogen. Die Druckregelung wie auch die nachfolgende Pyrolysegasleitung 86 ist zur Erhöhung der Betriebssicherheit redundant ausgeführt.

Am Pyrolyseausgangskopf ragt die Pyrolysetrommel 70 mit ihrem Endteil 71 um ein Mass a in ein Ausfallgehäuse 88 ein. Dieser Endteil 71 ist als Sieb zur Auftrennung der aus der Pyrolysetrommel 70 ausgetragenen Feststoffe, in eine gesiebte Feinfraktion und in eine aus dem offenen Endteil 71 austretende Grobfraktion ausgestaltet.

Die aus der Pyrolysetrommel 70 ausgetragenen Feststoffe, die i.w. aus Aluminium sowie aus Koks als Rückstand der organischen Anhaftungen eingesetzter Materialien bestehen, werden mittels zweier Schleusensysteme aus dem Ausfallgehäuse 88 ausgetragen.

Zur Abtrennung des Pyrolysekokses R1 wird das Material zunächst im Austrag der Pyrolysetrommel 70 über einen schwenkbaren Siebschuss 90 geführt. Feingut, i.w. Pyrolysekoks R1, fällt in einen darunterliegenden Schacht 92 und wird von dort zeitgetaktet über einen Dichtschieber 94 entsprechend dem Materialeintrag nach unten ausgetragen.

Über die Stellung des als verstellbare Klappe ausgebildeten Siebschusses 90 kann die den beiden Schleusensystemen zuzuweisende Fraktionsgrösse des ausgetragenen Materials eingestellt werden.

Der Pyrolysekoks R1 wird in einer wassergekühlten Kühlschnecke 96 mit Doppelmantel und indirekter Kühlung gekühlt. Aus der Schnecke fällt der gekühlte Koks in eine Zellenradschleuse 98; diese entleert in einen Transportcontainer 100. Die Wärmeabfuhr erfolgt durch einen Kühlwasserkreislauf, an den auch der Quenchewasserkreislauf angeschlossen ist, über insgesamt drei Kühltürme 102a-c.

Die Zusammensetzung des Pyrolysekokses erlaubt einen quantitativen Einsatz bei der Herstellung von Kohlenstoffprodukten, z.B. Anoden für die Aluminium-Elektrolyse.

Das verbleibende Material - als Siebrückstand des Siebschusses 90 ― wird über ein aus zwei Dichtschiebern 104, 106 bestehendes Schleusensystem entsprechend dem Materialeintrag ausgetragen. Die Dichtschieber 104, 106 sind jeweils ebenfalls dichtschliessend ausgeführt. Der Materialaustrag erfolgt getaktet über diese Schieber. Zur Vermeidung von Falschlufteinbruch in die Pyrolysetrommel 70 kann jeweils nur einer der beiden Schieber geöffnet sein, was mittels einer Endlagenüberwachung gewährleistet ist.

Das Material wird aus dem Schleusensystem heraus auf ein Sieb 108 aufgegeben; auf diesem wird der noch im Materialstrom verbliebene freie Pyrolysekoks R1 als Siebdurchgang (Feingut) von der Aluminium-Fraktion getrennt über eine Zellenradschleuse 110 in die Kühlschnecke 96 ausgetragen; diese entleert wie oben beschrieben -- über die Zellenradschleuse 98 in den Transportcontainer 100. Der Pyrolysekoks kann beispielsweise bei der Herstellung von Kohleanoden für die Elektrolyse zur Aluminiumerzeugung verwertet werden.

Der noch mit Pyrolysekoks R1 behaftete heisse Aluminium-Hauptstrom wird über einen Heissgutförderer 112 und eine Zellenradschleuse 114 einem Blankglüh-Aggregat 116 zugeführt. In diesem Blankglüh-Aggregat 116 werden die noch vorhandenen Pyrolysekoksreste auf einem mit sauerstoffgeregelter Heissgaszufuhr durchströmten Schwingboden gezielt verbrannt. Als Heissgas werden anteilig Schmelzofenabgase S19 eingesetzt, denen entsprechend dem Sauerstoffgehalt auf der Abgasseite des Glühaggregates 116 Luft zugemischt wird. Die Heissgaszuführung erfolgt über einen Heissgasventilator 118. Die entstehenden Rauchgase werden der Brennkammer 78 zugeleitet.

Mit Aluminiumpartikeln verunreinigte Asche R3 wird als Siebdurchgang des Blankglüh-Aggregates 116 vom Aluminium-Hauptstrom abgetrennt und über eine Zellenradschleuse 128 in einen Sammelcontainer 130 abgeworfen.

Das geglühte Material, d.h. blankes Aluminium, wird als Siebrückstand über eine Zellenradschleuse aus dem Blankglüh-Aggregat 116 ausgetragen und danach mittels zweier hintereinander geschalteter Heissgutförderer 122, 124 zur Folienabscheidung in einen Pufferbehälter 126 aufgegeben. Aus diesem wird das Material über einen Stetigförderer 132 einem Sichter 134 zugeführt. Hier werden mittels Schmelzofenabgasen S19 und Luft bei einer Mischtemperatur von ca. 400°C durch Windsichtung Folien aus dem Materialstrom entnommen und anschliessend in einem Heissgaszyklon 136 aus der Sichtluft abgeschieden und über eine Zellenradschleuse 138 in einen Sammelcontainer 140 ausgetragen. Das Heissgas verlässt den Heissgaszyklon 136 über einen Heissgasventilator 137. Die abgeschiedenen Folienbestandteile können einer separaten Verwertung zugeführt werden.

Das bei der Windsichtung anfallende Schwergut, d.h. die verbleibende Aluminiumfraktion, gelangt aus dem Sichter 134 über eine Zellradschleuse 142 auf einen Heissgutförderer 144. Dieser mündet in einer Wechselklappe 146, die den Materialstrom, d.h. blankes Aluminium S13, auf zwei Linien aufteilt. Der eine Teil wird direkt in einen Pufferbehälter 148 abgegeben, der andere Teil gelangt über zwei hintereinander geschaltete Heissgutförderer 150, 152 in einen weiteren Pufferbehälter 154.

Beide Pufferbehälter bzw. Silos 148, 154 beschicken mittels Stetigförderern 156, 158 eine angegliederte Schmelzanlage BE3.

Das Pyrolysegas S7 wird aus der Pyrolysetrommel 70 über eine redundante Druckregelung am Ausfallgehäuse 88 entnommen. Die Absaugmenge des Gases richtet sich dabei nach dem Trommelinnendruck.

Das abgetrennte Pyrolysegas wird auf kürzestem Weg mittels der ebenfalls redundant ausgeführten doppelmantelbeheizten Pyrolysegasleitung 86 der Brennnkammer 78 zugeführt. Der Heizmantel 84 der Pyrolysegasleitung 86 wird hierbei mit Heizmantelabgas der Pyrolysetrommel 70 beaufschlagt.

Bei der Brennkammer 78 handelt es sich um eine ausgemauerte hochtemperaturfeste Brennkammer (Brennermuffel), in die das Pyrolysegas über eine Ringleitung rückzündsicher aufgegeben wird. Neben Pyrolysegas werden in die Brennkammer 78 Abgase des Blankglühofens (S18), des Windsichters (S20), verbleibende Rauchgasmengen der Schmelzanlage (S19), Abluft der Aufbereitungsanlage (S22) sowie zusätzlich Frischluft eingespeist. Die Einspeisung der Verbrennungsluft erfolgt gestuft auf verschiedenen Ebenen, um eine möglichst NOₓ-arme Verbrennung zu erreichen.

Sauerstoffgehalt sowie Temperatur in der Brennkammer 78 werden registrierend überwacht. Es wird eine Brennkammertemperatur von 1200°C gehalten sowie ein Sauerstoffgehalt oberhalb 6% grundsätzlich sichergestellt. Durch die Brennkammergeometrie wird eine Mindestverweilzeit der Rauchgase von 2 sec erreicht. Im An- und Abfahrbetrieb der Anlage wird die Brennkammer mit Erdgas betrieben.

Das Brennkammerabgas wird, sofern es nicht als Teilstrom zur Pyrolysetrommelheizung (S8) genutzt wird, der Quenche 160 zugeleitet. Das für die Beheizung genutzte Brennkammerabgas wird erneut der Brennkammer 78 aufgegeben.

In der Quenche 160 wird das Rauchgas S9 schlagartig auf unter 150°C abgekühlt. Hierdurch wird eine Neubildung polychlorierter p-Dibenzodioxine und Dibenzofurane (PCDD/PCDF) verhindert (Vermeidung einer "de-novo-Synthese"). In Verbindung mit dem bei der Hochtemperaturverbrennung erreichbaren Ausbrand ist eine bestmögliche Verminderung der PCDD/PCDE-Emission durch Primärmassnahmen zu erreichen.

Die schlagartige Abkühlung wird erreicht durch die Eindüsung einer sehr grossen Wassermenge in den Gasstrom. Diese wird durch eine Quenche-Sumpfpumpe bzw. Wasserzirkulationspumpe 162 umgewälzt, Verdunstungsverluste werden laufend niveaugeregelt in den Quenchesumpf ersetzt. Die über das umgewälzte Wasser aus dem Gasstrom entnommene Wärme wird über einen Wärmetauscher 164 an einen zweiten Wasserkreislauf abgeführt und über die insgesamt drei Kühltürme 102a-c an die Umgebung abgegeben. Zur Sicherstellung der Kühlwirkung ist die Quenche 160 mit einem Notbedüsungssystem ausgerüstet; bei Ausfall der Wasserzirkulationspumpe 162 der Quenche 160 kann über eine zusätzliche Notwasser-Pumpe 163 Wasser in die Quenche 160 eingedüst werden. Bei Stromausfall wird dieses System über die Notstromversorgung weiter betrieben.

Nach der Quenche 160 gelangt das abgekühlte Abgas S10 zunächst in einen Tropfenabscheider 166 und anschliessend in einen zweistufig ausgeführten Gaswäscher 168a,b. Am Tropfenabscheider 166 anfallende Flüssigkeit wird in den Quenchekreislauf rezirkuliert.

Das aus der Brennkammer 78 austretende heisse Abgas kann alternativ einer Energienutzung zugeführt werden. Hierzu tritt das Abgas nach dem Austritt aus der Brennkammer 78 in einen Kessel mit Kühlschlangen ein. Das gekühlte Abgas wird der Reinigung zugeführt. Der in den Kühlschlangen auf beispielsweise 400°C erhitzte Wasserdampf wird sodann mit einem Druck von z.B. 38 bar auf einen Generator zur Stromerzeugung geführt.

Als Waschflüssigkeitszusatz im Gaswäscher wird Natronlauge S17 eingesetzt; die Einspeisung erfolgt pH-geregelt über eine Natronlauge-Dosierpumpe 170 in den Sumpf bzw. in die Waschlaugenbehälter 175 der beiden Wäscherstufen. Zusätzlich wird niveaugeregelt Frischwasser nachgespeist. Aus dem Wäscherkreislauf sowie dem Quenchewasserkreislauf wird kontinuierlich Schlammwasser mit Wäscherschlamm (R2) ausgeschleust und mittels Wäschersumpfpumpen 172, 174 einer als Dünnschichtverdampfer 176 ausgestalteten Eindampfanlage zugeführt. Die Waschkreisläufe beider Wäscherstufen werden durch redundante Kreislaufpumpen 178, 180 (Stufe 1) und 182, 184 (Stufe 2) betrieben.

Das gewaschene Abgas S11 verlässt die Rauchgasreinigungsanlage mit einer Temperatur von ca. 85°C sowie wasserdampfgesättigt. Um eine bessere Ableitung der Abgase zu erreichen werden daher durch Zuspeisung noch heisser Schmelzabgase auf eine Temperatur von ca. 105 - 110°C angehoben und anschliessend mittels redundant ausgelegtem Abgasventilator über einen Kamin 190 in die freie Luftströmung abgeleitet.

Aus dem Wäscherschlamm verbleiben nach dessen Eindampfung i.w. Salze sowie Oxide (R2). Diese können, ggf. nach einer Rezepturkorrektur, als Schmelzsalz in der Schmelzanlage BE3 eingesetzt werden.

Die Schmelzanlage BE3 ist ein Zweikammer-System (open well) und besteht aus einer offenen Chargierkammer 190, 192 mit Vortex-System, einer Pumpe 194, 196, einem Herdofen als Heizkammer sowie einem Rinnensystem.

Vom Herdofen 198, 200 wird flüssiges Metall mit einer Pumpe über eine Rinne in die speziell ausgebildete Chargierkammer 190, 192 gefördert und dort in eine Rotationsbewegung versetzt, wodurch ein Wirbel (Vortex) entsteht.

In das rotierende, flüssige Metall wird über das Dosierfördersystem 156, 158 kontinuierlich festes Aluminium in den Wirbel aufgegeben. Bedingt durch die Rotationsbewegung und den Aufgabepunkt wird das feste Aluminium sofort unter die Badoberfläche gezogen und benetzt. Eine Oxidation des Aluminiums wird weitgehend vermieden.

Von der Chargierkammer 190, 192 gelangt der Metallstrom zurück in den Herdofen 198, 200. Dort wird die beim Schmelzvorgang aufgewendete Enthalpie durch Gasbeheizung kompensiert. Hierzu werden Erdgas-Luft-Brenner 202, 204 eingesetzt.

Oxide und Salze bleiben beim Schmelzvorgang auf der Badoberfläche als metallreiche Krätze zurück. In einem betriebsbedingten Rhythmus wird der Herdofen 198, 200 abgekrätzt.

Das schmelzflüssige Aluminium wird chargenweise entweder mit Flüssigmetalltiegel 206, 208 und Transportwagen der Giesserei zugeführt oder über eine Giessgruppe 210, 212 in Formate abgegossen.

Die Schmelzleistung der Anlage ist beispielsweise so ausgelegt, dass insgesamt max. 5 t/h erschmolzen werden können (jeweils 2,5 t/h pro Schmelzaggregat); diese Leistung wird dann gefahren, wenn nur Material mit wenig organischen Anhaftungen pyrolysiert wird. Im Mittel werden etwa 3,4 t/h erschmolzen.

Das erzeugte Metall wird entsprechend seiner Legierungszusammensetzung charakterisiert und verarbeitet.

## Patentansprüche

1. Aluminiumbasislegierung zur Herstellung von Gusslegierungen mit Magnesium als wesentlichstem Legierungselement,
dadurch gekennzeichnet, dass
sie mindestens 50% Schrottmetall auf Primäraluminiumbasis und als Rest Primäraluminium und/oder Schrottmetall auf Sekundäraluminiumbasis bekannter Zusammensetzung enthält.

2. Aluminiumbasislegierung nach Anspruch 1, dadurch gekennzeichnet, dass sie zu mindestens 80%, vorzugsweise zu 100%, aus Schrottmetall auf Primäraluminiumbasis besteht.

3. Aluminiumbasislegierung nach Anspruch 1 oder 2, dadurch gekennzeichnet, dass das Schrottmetall auf Primäraluminiumbasis überwiegend aus Lebensmittel- und Tiernahrungsverpackungen gewonnenes Recyclingmetall ist.

4. Verfahren zur Herstellung einer Aluminiumbasislegierung nach einem der Ansprüche 1 bis 3, dadurch gekennzeichnet, dass mit organischen Verbindungen behaftete Materialien auf Primäraluminiumbasis nach ihrem Heizwert und ihrem Aluminiumgehalt getrennt aufbereitet, zur Einstellung eines Sollwertes dosiert zusammengeführt, die organischen Verbindungen durch Pyrolyse unter Bildung von Pyrolysegas und Pyrolysekoks verschwelt, der Pyrolysekoks abgetrennt, die derart vorbehandelten Materialien ggf. blankgeglüht, ggf. zur Abtrennung von Folienbestandteilen gesichtet und nachfolgend eingeschmolzen werden.

5. Verfahren nach Anspruch 4, dadurch gekennzeichnet, dass Aluminium-Verbundstoffe auf eine stückige Grösse zerkleinert und nach der Pyrolyse Eisenteile abgetrennt werden.

6. Verfahren nach Anspruch 4 oder 5, dadurch gekennzeichnet, dass die Zusammenführung der getrennt aufbereiteten Materialien zur Einstellung des Sollwertes über ein computergesteuerte Dosieranlage erfolgt, wobei ggf. neben dem Heizwert und dem Aluminiumgehalt der Materialien weitere Parameter der aufbereiteten Materialien, insbesondere deren Feuchte, Schüttgewicht und Korngrösse, berücksichtigt werden.

7. Gusslegierung, hergestellt aus einer Aluminiumbasislegierung nach einem der Ansprüche 1 bis 3, dadurch gekennzeichnet, dass sie zusätzlich 3.0 bis 5.0 Gew.-% Magnesium und 1.5 bis 3.0 Gew.-% Silizium enthält.

8. Gusslegierung nach Anspruch 7, dadurch gekennzeichnet, dass sie zusätzlich 0.5 bis 1.2 Gew.-% Mangan und/oder 0.5 bis 1.2 Gew.-% Kupfer enthält.

9. Gusslegierung nach Anspruch 7 oder 8, dadurch gekennzeichnet, dass sie zusätzlich max. 0.2 Gew.-% Titan enthält.

10. Gusslegierung nach einem der Ansprüche 7 bis 9, dadurch gekennzeichnet, dass sie zusätzlich max. 0.4 Gew.-% Kobalt, max. 0.4 Gew.-% Cer und max. 1.2 Gew.-% Zirkonium enthält.

11. Verfahren zur Herstellung einer Gusslegierung nach einem der Ansprüche 7 bis 10, dadurch gekennzeichnet, dass zu einer Schmelze aus der Aluminiumbasislegierung, einschliesslich ggf. zugegebener weiterer Legierungselemente, 0.02 bis 0.15 Gew.-% Vanadium, vorzugsweise 0.02 bis 0.08 Gew.-% Vanadium, insbesondere 0.02 bis 0.05 Gew.-% Vanadium, und weniger als 60 ppm Beryllium zugegeben wird.

12. Verwendung von aus einer Aluminiumbasislegierung nach einem der Ansprüche 1 bis 3 hergestellten Gusslegierungen nach einem der Ansprüche 7 bis 10 zur Herstellung von warmfesten und/oder korrosionsbeständigen Teilen im Motorenbereich, insbesondere zur Herstellung von Motorblöcken, Zylinderköpfen und Ölwannen, mittels Sand-, Kokillen-, Druckguss, Thixocasting und Thixoschmieden.
